# EUROPEAN PATENT SPECIFICATION

(11) **EP 1 342 631 B1**
(45) Date of publication and mention of the grant of the patent: **21.05.2008**
(21) Application number: 03002367.5
(22) Date of filing: 04.02.2003
(51) Int. Cl.: B60R 22/10, A01K 1/02, A01K 27/00

(54) **Animal restraint system for vehicles**
Tierrückhaltesystem für Kraftfahrzeuge
Système de retenu d'animal pour véhicules

(30) Priority: 13.02.2002 US 72943; 25.09.2002 US 254182
(43) Date of publication of application: 10.09.2003
(73) Proprietor: BOS Automotive Products, Inc., Rochester Hills, Michigan 48309 (US)
(72) Inventor: Lobanoff, Mark, Troy, Michigan 48098 (US); Gulette, Ronald S., Farmington Hills, Michigan 48336 (US)
(74) Representative: Rüger, Barthelt & Abel Patentanwälte

(56) References cited:
- US-A- 5 913 285
- US-A- 5 915 335
- US-A- 6 101 979

## Description

### FIELD OF THE INVENTION

The present invention relates to animal restraints, and more particularly, to animal restraint systems for vehicles.

### BACKGROUND OF THE INVENTION

Animals (particularly pets) are often transported in the passenger compartment of vehicles. If the animal is unrestrained, this presents a danger to both the animal and the human occupants of the vehicle. An unrestrained animal can interfere with the driver of the vehicle, such as by jumping on the driver's lap. Also, in the event that vehicle brakes suddenly, makes a sudden maneuver, or comes to a sudden stop such as in the case of an accident, the unrestrained animal may be thrown about the passenger compartment of the vehicle. This can injure the animal. It can also injure a human occupant if the animal is thrown into this occupant with enough force. It can also cause the driver to lose control of the vehicle if the animal is thrown into the driver when the driver is attempting to bring the vehicle to a stop or maneuvering the vehicle.

US 6,101,979 shows an adjustable safety pet harness for dogs and cats. By means of this harness the pet can be strapped to a vehicles seat belt for preventing the pet from being thrown through the interior of the vehicle upon a sudden stoppage.

The known harness includes a chest pat covering the animals chest. A plurality of straps are provided to keep the pet against the chest pat, which straps include a strap surronding the animals trunk close to the front leg and two straps extending crosswise between the front legs and continuing on the shoulders of the animal.

It is an object of this invention to provide an animal restraint system for a vehicle that restrains the animal from moving about the passenger compartment of the vehicle and also restrains the animal from being thrown about the passenger compartment of the vehicle if the vehicle suddenly brakes, maneuvers or stops.

### SUMMARY OF THE INVENTION

An animal restraint system for a vehicle has a vest having leg holes for front legs of an animal. A top strap extends across the top of an animal wearing the vest and is looped through a buckle tongue and a webbing adjuster defining top and bottom portions of the top strap. The vest is secured to a seat belt of a vehicle by passing the seat belt between the top and bottom portions of the top strap. The top portion of the top strap can be pulled through the webbing adjuster to shorten the bottom portion to adjust the top strap. In an embodiment, the top strap is rotatably coupled to the vest.

In an aspect of the invention, a buckle attachment clip is secured to a buckle that mates with the buckle tongue and looped through a ring secured to one side of the vest and a webbing adjuster attachment clip is secured to the webbing adjuster and looped through a ring secured to the other side of the vest. This rotatably couples the top strap to the vest.

In another aspect of the invention, a buckle attachment strap is secured to a buckle that mates with. the buckle tongue and looped around an attachment strap that is roped and secured to one side of the vest jacket. A webbing adjuster attachment strap is secured to the webbing adjuster and looped around a second attachment strap secured to the other side of the vest. This rotatably couples the top strap to the vest.

In an aspect of the invention, the animal restraint system has two top straps. The top straps are coupled to a first side of the vest jacket above one of the leg holes by individual buckles and to a second side of the vest jacket above the other leg hole by individual webbing adjusters.

In an aspect of the invention, the top and bottom portions of the top strap are secured together adjacent the buckle tongue to have a predetermined breakaway force.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of an animal restraint system in accordance with an aspect of the invention;
Figure 2 is a side view of the animal restraint system of Figure 1;
Figure 3 is another perspective view of the animal restraint system of Figure 1;
Figure 4 is a side view of an animal restraint system in accordance with an aspect of the invention;
Figure 5 is a perspective view of the animal restraint system of Figure 4;
Figure 6 is a perspective view of an animal restraint system in accordance with an aspect of the invention;
Figure 7 is a perspective view of an animal restraint system in accordance with an aspect of the invention; and
Figure 8 is a perspective view of an animal restraint system in accordance with an aspect of the invention.

### DETAILED DESCRIPTION OF THE PREFERRED EMBODIMENTS

The following description of the preferred embodiment(s) is merely exemplary in nature and is in no way intended to limit the invention, its application, or uses.

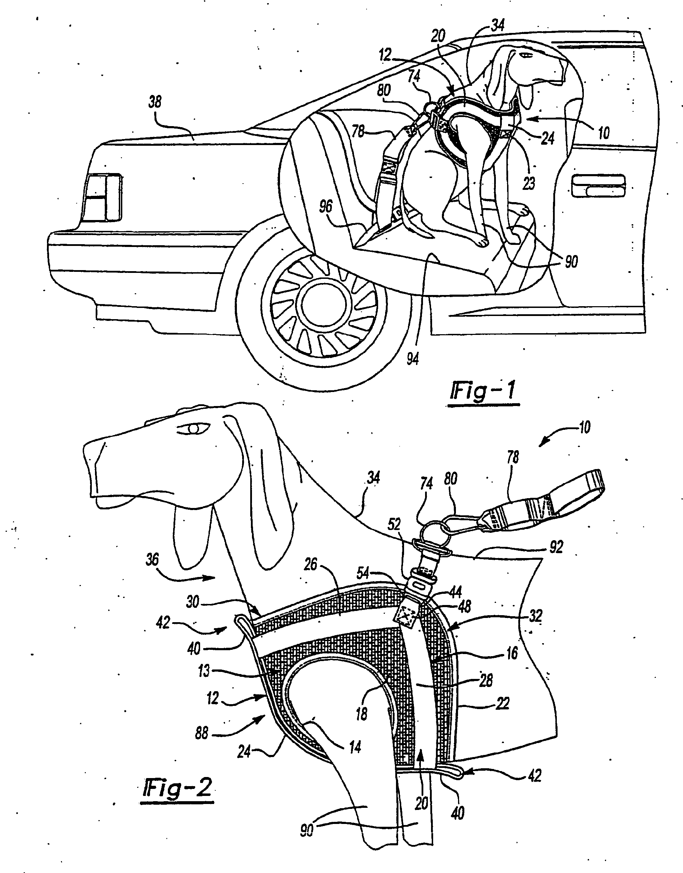

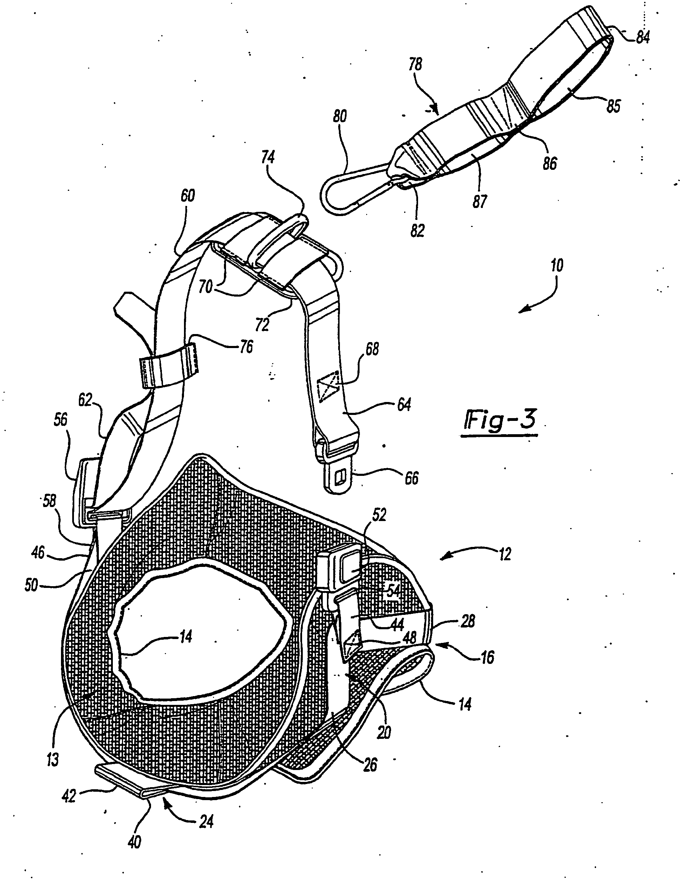

Figures 1-3 show an animal restraint system 10 for vehicles in accordance with the invention. Animal restraint system 10 includes a vest 12 having leg holes 14 for front legs 90 of animal 34. Vest 12 is symmetrical about leg holes 14. Illustratively, vest 12 is spherical in shape, that is, has a spherical radius, to provide this symmetry. Vest 12 includes a vest jacket 13 with reinforcing straps 16 secured to an outer side 18. Reinforcing straps 16 include peripheral strap 20 extending around vest jacket 13 adjacent a periphery 22 of vest jacket 13 and a chest strap 24 extending between leg holes 14.

Peripheral strap 20 illustratively includes a first strap 26 extending around a first side 30 of vest jacket 13 adjacent periphery 22 and a second strap 28 extending around a second side 32 of vest jacket 13 near periphery 22. As oriented in Figure 2, first side 30 of vest jacket 13 is a front side of vest jacket 13 and second side 32 of vest jacket 13 is a rear side of vest jacket 13. As mentioned, however, vest 12 is symmetrical about leg holes 14 and can be placed on animal 34 with either first side 30 or second side 32 of vest jacket 13 at a front 36 of animal 34.

First and second straps 26, 28 of peripheral strap meet above each leg hole 14 and are stitched together and to vest jacket 13 thereat. It should be understood that other means of securement can be used, such as rivets. Chest strap 24 extends across vest jacket 13 between leg holes 14 from first strap 26 of peripheral strap 20 to second strap 28 of peripheral strap 20. Chest strap 24 and first and second straps 26, 28 of peripheral strap 20 are stitched together and to vest jacket 13 where they meet. Although peripheral strap 20 and chest strap 24 are illustratively secured to vest jacket 13 and to each other by stitching, it should be understood that other means of securing peripheral strap 20 and chest strap 24 to each other and to vest jacket 13 can be utilized, such as rivets.

Vest jacket 13 is illustratively made of a nylon netting and reinforcing straps 16 illustratively made of a polyester webbing of the type used in vehicle restraint systems. Vest jacket 13 and reinforcing straps 16 are sized to withstand the forces generated by sudden braking, maneuvering or stopping of a vehicle, such as vehicle 38.

One of the areas of maximum force during sudden braking, maneuvering or stopping of vehicle 38 is chest 88 of animal 34. Chest strap 24 is thus illustratively a strap that is doubled back on itself to comprise a double strap so that loops 40 are formed at opposed ends 42 of chest strap 24. The ends of the this strap are secured to each other at 23, such as by stitching. Other means of securement can be used, such as rivets. Peripheral strap 20 extends through loops 40 and is secured to chest strap 24 and vest jacket 13 thereat, such as by stitching. Other means of securement can be used, such as rivets.

Attachment straps 44, 46 are secured at respective ends 48, 50, respectively to vest jacket 13 and peripheral strap 20 where first and second straps 26, 28 of peripheral strap 20 join together above leg holes 14. Attachment straps 44, 46 are illustratively secured to vest jacket 13 and peripheral strap 20 by stitching, although other means of securement can be used, such as rivets.

Attachment strap 44 has a buckle 52 secured to an end loop 54 of attachment strap 44. Illustratively, attachment strap 44 loops through buckle 52 and is secured to itself, by stitching, riveting, or other securement means, to secure buckle 52 to second end 54 of attachment strap 44. Attachment strap 46 has a strap length adjuster 56 secured to an end loop 58 of attachment strap 46. Buckle 52 is illustratively a buckle of the type used in vehicle restraint systems, such as seat belts or child car seats, and strap length adjuster 56 is a strap length adjuster of the type used in vehicle restraint systems.

Animal restraint system 10 also includes a top strap 60. A first end 62 of top strap 60 is looped through strap length adjuster 56 to secure first end 62 of top strap 60 to strap length adjuster 56. First end 62 of top strap 60 can be pulled through strap length adjuster 56 in conventional fashion to adjust the length of top strap 60 that extends over animal 34. Top strap 60 has a second end 64 looped through a tongue 66 and secured to top strap 60 at 68, such as by stitching. Other means of securement could be used, such as rivets. Top strap 60 is illustratively made of a polyester webbing of the type used in vehicle restraint systems and is sized to withstand the forces generated by sudden braking, maneuvering or stopping of a vehicle, such as vehicle 34.

Top strap 60 passes through strap loops 70 of a pad 72 and an attachment loop 74 to slidably secure attachment loop 74 and pad 72 to top strap 60. Attachment loop 74 is disposed between strap loops 70 of pad 72. Top strap 60 also passes through a strap holder 76, which is illustratively two pieces of webbing stitched together so that strap holder 76 slides on top strap 60. First end 62 can be placed in strap holder 76 to hold it in place. Attachment loop 74 is made of material sufficiently strong to withstand the forces generated by sudden braking, maneuvering or stopping of a vehicle. Attachment loop 74 is illustratively made of steel, although it can be made of other materials.

Animal restraint system 10 includes a tether strap 78 to secure vest 12 to vehicle 38. Tether strap 78 has a clip 80 secured at a first end 82, illustratively, by looping tether strap 78 through clip 80. Tether strap 78 is illustratively a length of webbing looped back on itself twice to provide a quadruple thick strap which is secured together adjacent first end 82 and at a middle 86 of tether strap 78, such as by stitching. Other means of securement can be used, such as rivets. Tether strap 78 thus has a loop 85 at a second end 84 and a loop 87 between first end 82 and middle 86. Tether strap 78 is illustratively made of a polyester webbing of the type used in vehicle restraint systems and is sized to withstand the forces generated by sudden braking, maneuvering or stopping of a vehicle, such as vehicle 34.

As discussed below, seat belt 96 is inserted through loop 85 or loop 87 to secure tether strap 78 to seat belt 96. The two loops 85 and 87 allow for some adjustment in the length of tether strap 78 between vest 12 and seat belt 96, with the length of tether strap 78 between vest 12 and seat belt 96 being shorter when seat belt 96 is passed through loop 87 then when passed through loop 85. It should be understood that more loops can be provided in tether strap by securing together the webbing used for tether strap 78 at places in addition to middle 86 allowing for finer length adjustment. Clip 80 is made of material sufficiently strong to withstand the forces generated by sudden braking, maneuvering or stopping of a vehicle. Clip 80 is illustratively made of steel, although it can be made of other materials.

To use animal restraint system 10, vest 12 is placed over the chest 88 of animal 34 with front legs 90 of animal 34 extending through leg holes 14 of vest 12. Since vest 12 is symmetrical about leg holes 14, there is no true front or back. Vest 12 can thus be rotated 180 degrees front to back and placed on animal 34 in either orientation. The user of animal restraint system 10 thus need not determine the front or back of animal restraint system 10 when placing animal restraint system 10 on animal 34, which simplifies doing so.

After vest 12 is placed on animal 34, top strap 60 is brought over the back 92 of animal 38 and tongue 66 inserted into buckle 52. If this is the first time animal restraint system 10 is placed on animal 34, the length of top strap 60 is adjusted with strap length adjuster 56.

After animal restraint system 10 is placed on animal 34, animal 34 is placed on the rear seat 94 of vehicle 38. Seat belt 96, which illustratively includes a lap belt and shoulder belt, is inserted through loop 85 or loop 87 of tether strap 78, buckled and snugged. Clip 80 of tether strap 78 is clipped to attachment loop 74 of top strap 60, securing animal restraint system in vehicle 38.

Clip 80 of tether strap 78 can be undipped from attachment loop 74 of top strap 60 to allow easy removal of animal 34 from vehicle 38. A leash (not shown) can be clipped to attachment loop 74. Alternatively, seat belt 96 can be unbuckled and tether strap 78 removed to allow removal of animal 34 from vehicle 38 and tether strap 78 can then be used as a leash.

Buckle 52 can also be unbuckled, allowing animal 34 to step out of vest 12. In this regard, animal restraint system 10 is left coupled to seat belt 96. Animal restraint system 10 can then be easily and rapidly secured to animal 34 by placing the front legs 90 of animal 34 through leg holes 14 of vest jacket 12 and inserting tongue 66 of top strap 60 into buckle 52.

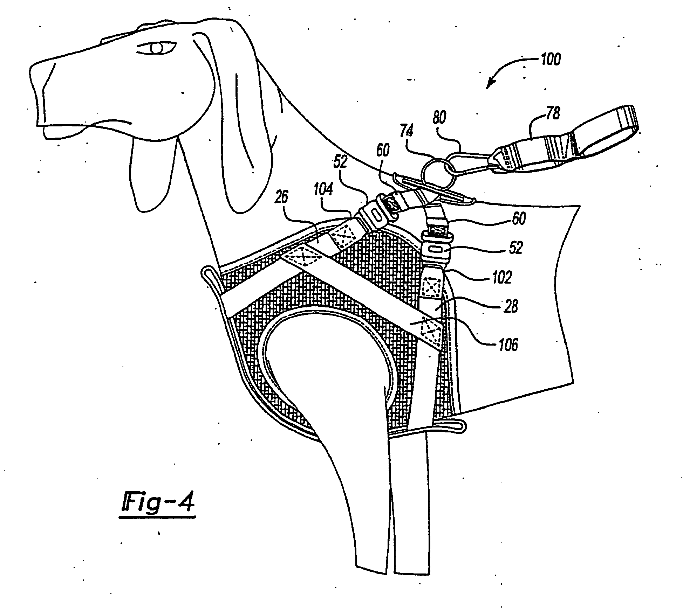

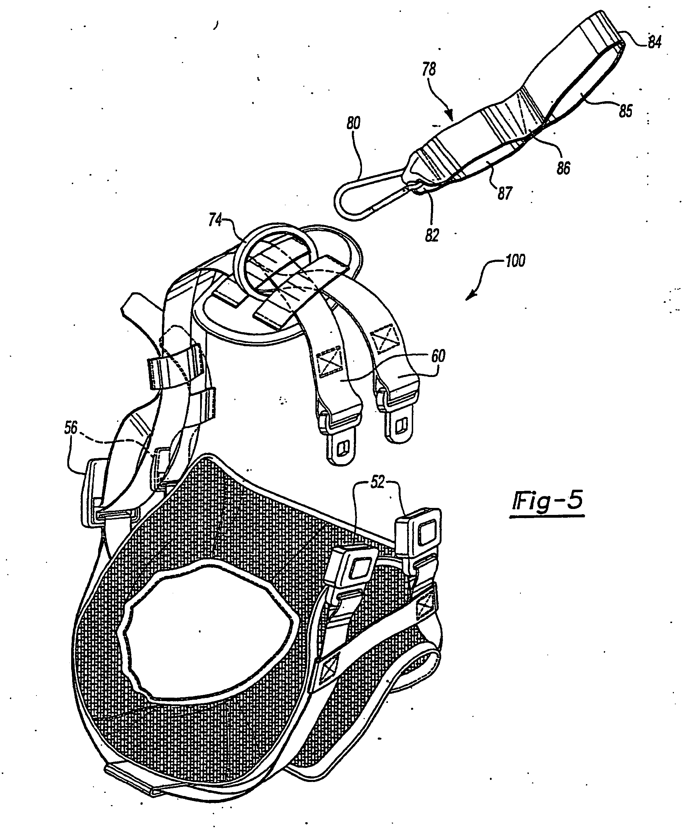

Figures 4 and 5 show an animal restraint system 100 for larger animals. Animal restraint system 100 is a variation of animal restraint system 10 and only the differences will be discussed. Like elements will be identified with the same reference numbers.

The main difference between animal restraint system 100 and animal restraint system 10 is that animal restraint system 100 has a four point harness system whereas animal restraint system 10 has a two point harness system. In this regard, top strap 60 of animal restraint system 100 is attached to vest jacket 13 and reinforcing straps 16 by two buckles 52 and two strap length adjusters 56. Illustratively, animal restraint system 100 has two top straps 60, with each top strap 60 passing through attachment loop 74. First strap 26 and second strap 28 of peripheral strap 20 of vest 12 are illustratively secured to outer side 18 of vest jacket 13 at separate points above leg holes 14, with buckles 52 secured to ends 102, 104 of first and second straps 26, 28, respectively. Attachment straps 44, 46 may thus be dispensed with. Similarly, strap length adjusters 56 are secured to the ends of first and second straps 26, 28 on the opposite side of vest jacket 13. The foregoing arrangement comprises the four point harness system.

Reinforcing straps 16 of vest 12 of animal restraint system 100 may include reinforcement straps 106 on opposite sides of vest jacket 13 (only one side being shown in Figure 4) extending between first and second straps 26, 28 above leg holes 14. Reinforcement straps 106 are illustratively secured to first and second straps 26, 28 and vest jacket 13 by stitching. Other securement means can be used, such as rivets. Reinforcement straps 106 are also illustratively made of polyester webbing of the type used in vehicle restraint systems.

Animal restraint systems 10 and 100 restrain the animal 34 from moving about the passenger compartment of vehicle 38. Animal restraint systems 10, 100 also restrain the animal 34 in the event of a sudden maneuver, sudden braking, or sudden stop of the vehicle 38 and prevent the animal 34 from being thrown around the passenger compartment of the vehicle 38.

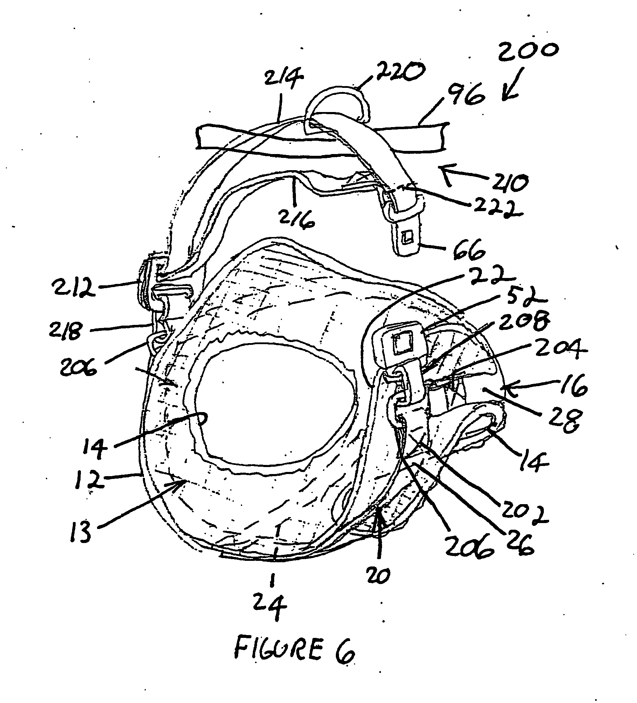

Figure 6 shows another embodiment of the animal restraint system for vehicles of the present invention. Elements in animal restraint system 200 of Figure 6 comparable to animal restraint system 10 of Figures 1 - 3 will be identified with the same reference numerals. The description of animal restraint system 200 will focus on the elements of animal restraint system 200 that are different from the elements of the animal restraint system 10 shown in Figures 1-3.

In animal restraint system 200, top strap 210 is rotatably secured to vest jacket 13. This allows vest jacket 13 and top strap 210 to rotate with respect to each other to provide a better fit of vest jacket 13 on animal 34, as discussed in more detail below.

In the embodiment of Figure 6, top strap 210 is rotatably secured to vest jacket 13. In this regard, first and second straps 26, 28 of peripheral strap 20 are not stitched together above leg holes 14. Rather, ends 202, 204 of first and second straps 26, 28 are looped through rings 206 above each leg hole 14 and back on themselves where they are secured to their respective first and second strap 26, 28, such as by stitching, rivets or the like. Buckle 52 is rotatably secured to one of the rings 206 above one of the leg holes 14 by buckle attachment clip 208. Buckle attachment clip 208 is clipped around a portion of buckle 52 and ring 206 and secured to itself, such as by crimping its ends.

Top strap 210 is a continuous loop that loops through tongue 66 and a webbing adjuster 212, thus having a top portion 214 and a bottom portion 216, as oriented in Figure 6. Top and bottom portions 214, 216 of top strap 210 are secured together adjacent tongue 66 at 222 such as by stitching, riveting or the like. Top and bottom portions 214, 216 are secured together adjacent tongue 66 at 222 so that they will breakaway from each other at a predetermined force, discussed in more detail below. Tongue 66 mates with buckle 52 as described above. Top portion 216 also passes, through a D-ring 220 that provides a ring to which a leash can be attached.

Webbing adjuster 212 is rotatably secured to ring 206 above leg hole 14 by webbing adjuster attachment clip 218 on the side of vest jacket 13 opposite the side on which buckle 52 is attached to vest jacket 13. Webbing adjuster attachment clip 218 clips around a portion of webbing adjuster 212 and ring 206 and is secured to itself, such as by crimping its ends, to rotatably secure webbing adjuster 212 to vest jacket 13. In this regard, vest jacket 13 is rotatably attached to top strap 210 in the manner described above.

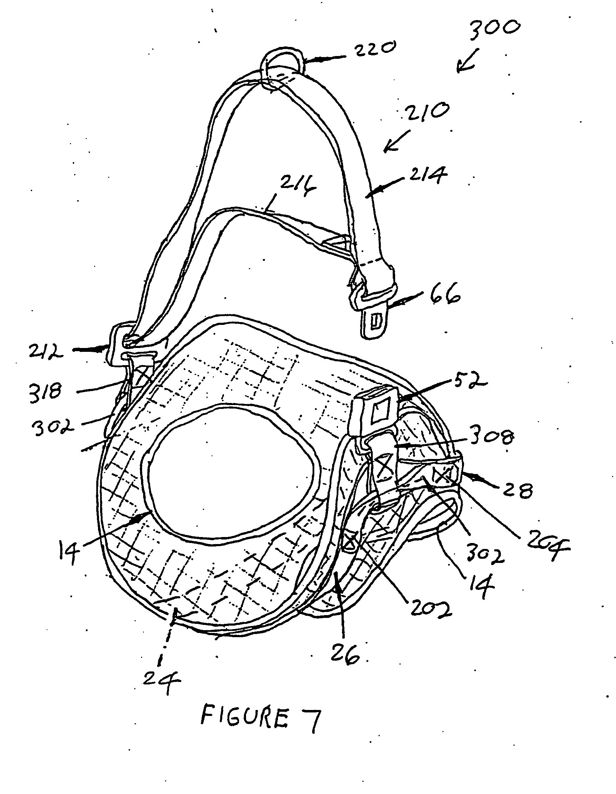

Rings 206 are illustratively elongated steel rings sized to withstand the force generated by a sudden stop or impact by the size of animal for which the animal restraint system 200 is intended to be used. Attachment clips 208, 218 are illustratively steel clips also sized to withstand the force generated by a sudden stop or impact by the size of animal for which the animal restraint system 200 is intended to be used. In this regard, it should be understood that while attachment clips 208, 218 can be used advantageously for smaller animals, larger animals may require a different way of attaching buckle 52 and webbing adjuster 212 to rings 206, such as described with reference to Figure 7.

Animal 34 is placed in animal restraint system 200 in a manner similar to that described above. Top strap 210 is brought over the back of animal 34 and tongue 66 mated with buckle 52. Top portion 214 of top strap 210 is pulled upwardly to tighten top strap 210. Pulling top portion 214 upwardly pulls bottom portion 216 through webbing adjuster 212, shortening bottom portion 216 and lengthening top portion 214. Shortening bottom portion 216 tightens top strap 210 around animal 34. Webbing adjuster 212, illustratively available from Indiana Mills of Westfield, Indiana, works in known fashion and keeps top portion 214 from being pulled through webbing adjuster 212 unless bottom portion 216 is pulled at an angle with respect to webbing adjuster 212, generally, a perpendicular angle.

Rings 206 rotatably secure top strap 210 to vest jacket 13 and allow top strap 210 and vest jacket 13 to rotate with respect to each other when vest jacket 13 is placed on animal 34. This allows vest jacket 13 to be oriented on animal 34 so that it more closely conforms to the contours of the body of animal 34, particularly, the neck and chest of animal 34. In the animal restraint system 10 shown in Figures 1 - 3, it was found that particularly with smaller animals, there would be a gap between the front of vest jacket 13 and the neck of animal 34 that sometimes would allow animal 34 to pull its legs out of vest jacket 13. Being able to rotate vest jacket 13 and top strap 210 with respect to each other to more closely conform vest jacket 13 to the contours of the body of animal 34 permits vest jacket 13 to be more closely fitted on animal 34, making it more difficult for animal 34 to get out of vest jacket 13.

Elongated rings 206 permit buckle attachment clip 208 and webbing adjuster attachment clip 218 to slide therein. Buckle attachment clip 208 and webbing adjuster attachment clip 218 permit buckle 52 and webbing adjuster 212 to be secured closer to rings 206 than the attachment straps of Figures 1 - 5, 7 and 8, reducing the circumference around vest jacket 13 and top strap 210. This permits animal restraint system 200 to be more closely fitted on smaller animals, thus making it more difficult for the smaller animal to escape from animal restraint system 200.

To secure vest 12 of animal restraint system 200 to vehicle 38 (Figure 1), seat belt 96 of vehicle 38 is passed through top strap 210 between top and bottom portions 214, 216. Top strap 210 will now bear the forces caused by a sudden stop or impact as opposed to ring 74 of the animal restraint system 10 shown in Figures 1-5. It was found that ring 74 had to be fairly large to withstand the forces generated by a sudden stop or impact. Having seat belt 96 loop through top strap 210 to secure animal restraint system 200 to vehicle 38 eliminates the need to have a bulky ring, as well as the need for tether strap 78.

As mentioned above, top and bottom portions 214, 216 of top strap 210 are secured together at 222 adjacent tongue 66 so that they will break away from each other at a predetermined breakaway force. In the event of a sudden stop or impact, seat belt 96 will pull on top portion 214, which may pull bottom portion 216 through webbing adjuster 212 shortening bottom portion 216, thus tightening top strap 210 on animal 34. To avoid over tightening top strap 210 on animal 34, top portion 214 breaks away from bottom portion 216 at a predetermined breakaway force. Once top portion 214 breaks away from bottom portion 216, top strap 210 will slide through tongue 66 as well as webbing adjuster 212 resulting in the lengths of top and bottom portions 214, 216 being equal. This loosens top strap 210 on animal 34 and avoids undue tightening of top strap 210 on animal 34. The predetermined breakaway force is set based on the size of animal 34 with which animal restraint system 200 is intended for use. The smaller the animal, the lower the predetermined breakaway force.

The predetermined breakaway force can be varied in differing ways depending on how the top portion 214 and bottom portion 216 of top strap 210 are secured together adjacent tongue 66. For example, if top portion 214 is stitched to bottom portion 216, varying the size and type of thread, the number of stitches and the number of lines of stitches results in different predetermined breakway forces. Where top strap 210 is a webbing strap, stitching top portion 214 to bottom portion 216 at 222 with a size 90 nylon thread using a lock stitch of six stitches per inch and one line of stitches results in a predetermined breakaway force of about fifty pounds per inch. Illustratively, top strap 210 will be a two-inch wide webbing strap and two rows of stitches will be used, resulting in a breakaway force of about 200 pounds. If top portion 214 is secured to bottom portion 216 by rivets, the predetermined breakaway force can be varied by varying the size and number of rivets used.

For larger animals, the size of rings 206 needed to withstand the force of a sudden impact or stop is fairly large. Animal restraint system 300 shown in Figure 7 provides an alternative way of rotatably attaching top strap 210 to vest jacket 13 to avoid the use of large, bulky size rings 206.

Animal restraint system 300 is for the most part identical to animal restraint system 200 and only the differences will be described. Elements of animal restraint system 300 comparable to the elements of animal restraint system 200 or animal restraint system 10 will be identified with like reference numerals. It should be understood that the components of animal restraint system 300 would be sized for the size of animal 34 with which animal restraint system 300 is intended to be used and thus may be larger than the comparable components of animal restraint system 200.

Animal restraint system 300 uses attachment straps 302, illustratively, web straps that have been "roped," to rotatably attach top strap 210 to vest jacket 13. An attachment strap 302 is secured on either side of vest jacket 13 above leg holes 14. Each attachment strap 302 is secured at its ends to the ends 202, 204 of straps 26, 28 of peripheral strap 20, such as by stitching, riveting or the like. Each attachment strap 302 is "roped" or twisted one or more turns before being secured. An attachment strap 308 (which is looped through buckle 52) is looped around an attachment strap 302 on one side of vest jacket 13 and webbing adjuster attachment strap 318 (which is looped through webbing adjuster 212) is looped around the attachment strap 302 on the other side of vest jacket 13. Attachment straps 308 and 318 can thus slide back and forth on attachment straps 302 allowing top strap 210 and vest jacket 13 to rotate with respect to each other. This also allows the location where top strap 210 is secured to vest jacket 13 to translate with respect to vest jacket 13. That is, the location where top strap 210 is secured to vest jacket 13 can move front to back and back to front with respect to vest jacket 13. The distance of translation is determined by the length of attachment straps 302 extending across respective sides of vest jacket 13.

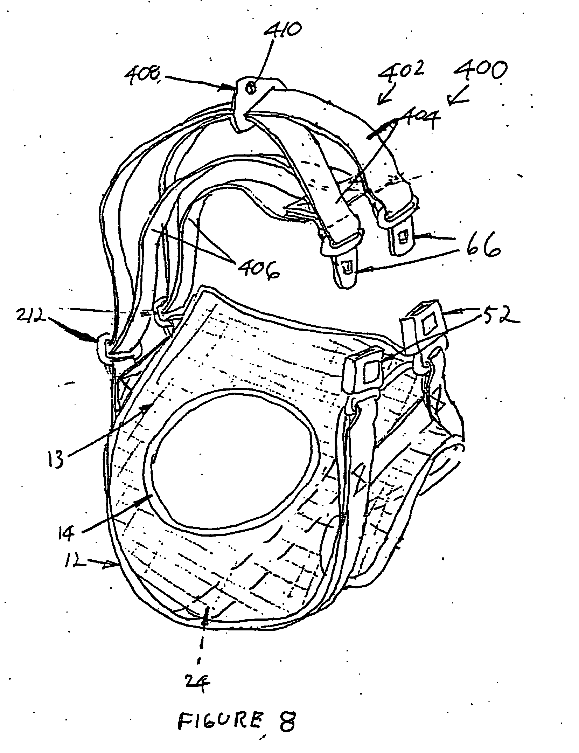

Turning to Figure 8, animal restraint system 400, a variation of the animal restraint system 100 of Figure 5 for yet larger animals is shown. Like elements will be identified with like reference numerals. Animal restraint system 400 has dual top straps 402 that pass through respective tongues 66 and webbing adjusters 212 in the same manner as top strap 210 of animal restraint systems 200, 300. The top portion 404 of each top strap 402 is secured to the bottom portion 406 of that top strap 402 adjacent a respective tongue 66 such as by stitching, riveting or the like. The top portion 404 of each top strap 402 is secured to the bottom portion 406 of the respective top strap 402 so that it breaks away at a predetermined force, as described above. Each top strap 402 is adjusted-in the same manner described above with respect to top strap 210 of Figures 6 and 7. To prevent tangling, a slider/loop 408 is provided through which the top portions 404 of dual top straps 402 pass. Slider/loop 408 has a hole 410 therethrough to which a leash can be attached. The dual top straps 402 may be oriented so that they cross each other (as shown in Figure 8) or run parallel to each other.

## Claims

1. An animal restraint system (10,100,200,300) for a vehicle (38), comprising
a vest having a vest jacket (12) including leg holes (14) for front legs (90) of an animal (34), and having front and rear sides (30,32) symmetrical about the leg holes (14) such that the vest (12) can be placed on the animal (34) with either of its front and rear sides (30,32) in front of the front legs (90) of the animal (34), and
a top strap (60,210,402) that extends across a back of the animal (34) wearing the vest from a first side of the vest jacket (12) to a second side of the vest jacket (12) when the vest jacket (12) is on the animal (34) to secure the vest to the animal (34), the top strap (60,210,402) being rotatably secured to the first and second sides of the vest jacket (12) and the vest being removably securable to a seat belt (96) of the vehicle (38).

2. The animal restraint system of claim 1 wherein the vest (12) is spherically shaped.

3. The animal restraint system of claim 1, and further including a tether strap (78) for removably securing the vest (12) to the seat belt (96) of the vehicle (38), the tether strap (78) having at least one loop (85,87) through which the seat belt (96) of the vehicle (38) is passed to removably secure the tether strap (78) to the seat belt (96).

4. The animal restraint system of claim 3 wherein the tether strap (78) has a plurality of loops (85,87) along its length, the seat belt (96) passed through one of the plurality of loops (85,87) to removably secure the tether strap (78) to the seat belt (96).

5. The animal restraint system of claim 3, wherein the vest (12) includes a vest jacket (13) and reinforcing straps (16) secured to the vest jacket (13).

6. The animal restraint system of claim 5 wherein the reinforcing straps (16) include a peripheral strap (20) extending around the vest jacket (13) adjacent a periphery thereof and a chest strap (24) extending from the peripheral strap (20) on the front side (30,32) of the vest jacket (13) to the peripheral strap (20) on the rear side (30,32) of the vest jacket (13) between the leg holes (14).

7. The animal restraint system of claim 3, and further including.a top strap (60,210,402) that extends across a back of the animal (34) from a first side of the vest (12) to a second side of the vest (12) when the vest (12) is on the animal (34) to secure the vest (12) to the animal (34), the tether strap (78) removably securable to the top strap (60,210,402) to secure the vest (12) to the seat belt (96) of the vehicle (38).

8. The animal restraint system of claim 7 wherein the vest (12) includes a vest jacket (13), the top strap (60,210,402) having a first end (62,64,202,204) removably coupled to the first side of the vest jacket (13) by a buckle (52).

9. The animal restraint system of claim 8 wherein the top strap (60,210,402) includes a second end (62,64,202,402) coupled to the second side of the vest jacket (13) by a strap length adjuster (56).

10. The animal restraint system of claim 9 wherein the top strap (60,210,402) is coupled to the vest jacket (13) by at least two buckles (52) and at least two strap length adjusters (56).

11. The animal restraint system of claim 8 wherein one of the top strap (60,210,402) and the tether strap (78) have a steel loop (74) secured thereto and the other of the top strap (60,210,402) and the tether strap (78) has a clip (80) secured thereto that clips to the steel loop (74) to removably couple the tether strap (78) to the top strap (60, 210, 402).

12. The animal restraint system of claim 11 wherein the steel loop (74) is secured to the top strap (60,210,402) by the top strap (60,210,402) passing through the steel loop (74), and the clip (80) is secured to a first end of the tether strap (78).

13. The animal restraint system of claim 7 wherein the top strap (60,210,402) includes at least two top straps (60,210,402), each top strap (60,210,402) coupled to the vest jacket (12) by a buckle (52) on the first side of the vest (12) and a strap length adjuster (56) on the second side of the vest jacket (12).

14. The animal restraint system of claim 13 wherein one of the at least two top straps (60,210,402) and the tether strap (78) have a steel loop (74) secured thereto and the other of the at least two top straps (60,210,402) and the tether strap (78) has a clip (80) secured thereto that clips to the steel loop (74) to removably couple the tether strap (78) to the top strap (60,210,402).

15. The animal restraint system of claim 14 wherein the steel loop (74) is secured to the at least two top straps (60,210,402) by the at least two top straps (60,210,402) passing through the steel loop (74), and the clip (80) is secured to a first end of the tether strap (78).

16. The animal restraint system of claim 3 wherein the top strap (60,210,402) passes through a steel loop (74) to secure the steel loop (74) to the top strap (60,210,402), the tether strap (78) having a clip (80) that removably clips to the steel loop (74).

17. The animal restraint of claim 6 wherein the chest strap (24) is secured to the peripheral strap (20).

18. The animal restraint system of claim 5 wherein the reinforcing straps (16) further include reinforcing straps (106) on opposite sides of the vest (12) that extend between the peripheral strap (20) above the leg holes (14) of the vest (12).

19. The animal restraint system of claim 7 wherein the top strap (210,402) includes a continuous loop that is looped through a buckle tongue and a webbing adjuster (212) defining top and bottom portions (214,216,404,406) of the top strap (406) extending between the buckle tongue and the webbing adjuster (212), the top and bottom portions (214,216,404,406) secured together adjacent the buckle tongue, the vest (12) removably securable to the seat belt (96) by passing the seat belt (96) between the top and bottom portions (214,216,404,406) of the top strap (210,402).

20. The animal restraint system of claim 13 and 19 and further including a buckle attachment clip (208) secured to the buckle (52) and a webbing adjuster attachment clip (218) secured to the webbing adjuster (212), the buckle attachment clip (208) and the webbing adjuster attachment strap looped through respective rings (206) secured on opposite sides of the vest jacket (13) to secure the top strap (210,402) to the vest jacket (13) .

21. The animal restraint system of claims 5 and 20 wherein the rings (206) are secured to the vest jacket (12) by the reinforcing straps (26,28) looped through respective ones of the rings (206) .

22. The animal restraint system of claim 1 and further including at least first and second attachment straps (46,218,318), each of the first and second attachment straps (46,218,318) secured at opposed ends to the vest jacket (13) on opposite sides of the vest jacket (13), a buckle attachment strap secured to the buckle (52) and looped around the first attachment strap (46,218,318) and a webbing adjuster attachment strap secured to the webbing adjuster (212) and looped around the second attachment strap (46,218,318).

23. The animal restraint system of claim 22 wherein the ends of the first and second attachment straps (46,218,318) roped and secured to the reinforcing straps (26,28).

24. The animal restraint system of claims 19 and 22 wherein the buckle attachment strap (208,308) and webbing adjuster attachment strap can slide between opposed ends of the first and second attachment straps (46,218,318) allowing a location where the top strap (210,402) is secured to the vest jacket (13) to translate with respect to the vest jacket (13).

25. The animal restraint system of claim 24 wherein the top portion and the bottom portion (214,216,404,406) of the top strap (210,402) are secured together adjacent the tongue to have a predetermined breakaway force.

26. The animal restraint system of claim 25 wherein the top and bottom portions (214,216,404,406) of the top strap (210,403) are secured together adjacent the tongue by stitches, the predetermined breakaway force determined by at least one of the size of thread, type of thread, type of stitches and number of stitches.

## Patentansprüche

1. Tierrückhaltesystem (10,100,200,300) für ein Kraftfahrzeug (38),
mit einer Weste mit einem Westenmantel (12), der Beinlöcher (14) für die Vorderbeine (90) eines Tieres (34) und der eine Vorderkante und eine Hinterkante (30,32) aufweist, die symmetrisch zu den Beinlöcher (14) liegen, so dass sich die Weste (12) sowohl mit ihrer Vorderkante als auch mit ihrer Hinterkante (30,32) vor den Vorderbeinen (90) des Tieres (34) an dem Tier (34) anlegen lässt, und
mit einem oberer Gurt (60,210,402), der sich bei an dem Tier (34) angelegten Westenmantel (12) von einer ersten Flanke des Westenmantels (12) ausgehend zu einer zweiten Flanke des Westenmantels (12) quer über den Rücken des die Weste tragenden Tieres (34) erstreckt, um die Weste an dem Tier (34) zu sichern, wobei der obere Gurt (60,210,402) an der ersten und zweiten Flanke des Westenmantels (12) schwenkbar befestigt ist, und wobei sich die Weste abnehmbar an einem Sicherheitsgurt (96) des Fahrzeugs (38) sichern lässt.

2. Tierrückhaltesystem nach Anspruch 1, wobei die Weste (12) kalottenförmig ausgebildet ist.

3. Tierrückhaltesystem nach Anspruch 1, zu dem ferner ein Anleingurt (78) gehört, der dazu dient, die Weste (12) abnehmbar an dem Sicherheitsgurt (96) des Fahrzeugs (38) zu sichern, wobei der Anleingurt (78) wenigstens ein Schlaufe (85,87) aufweist, durch die der Sicherheitsgurt (96) des Fahrzeugs (38) hindurchgeführt ist, um den Anleingurt (78) an dem Sicherheitsgurt (96) abnehmbar zu sichern.

4. Tierrückhaltesystem nach Anspruch 3, wobei der Anleingurt (78) entlang seiner Länge eine Anzahl von Schlaufen (85,87) aufweist und der Sicherheitsgurt (96) durch eine der Anzahl von Schlaufen (85,87) hindurchgeführt wird, um den Anleingurt (78) abnehmbar an dem Sicherheitsgurt (96) zu sichern.

5. Tierrückhaltesystem nach Anspruch 3, wobei die Weste (12) einen Westenmantel (13) und an dem Westenmantel (13) befestigte Verstärkungsgurte (16) beinhaltet.

6. Tierrückhaltesystem nach Anspruch 5, wobei zu den Verstärkungsgurten (16) ein randseitiger Gurt (20), der sich um der Westenmantel (13) benachbart zu dem Rand desselben erstreckt, und ein Brustgurt (24) gehört, der sich von dem randseitigen Gurt (20) ausgehend von der Vorderkante (30,32) des Westenmantels (13) zwischen den Beinlöchern (14) zu dem randseitigen Gurt (20) an der Hinterkante (30,32) des Westenmantels (13) erstreckt.

7. Tierrückhaltesystem nach Anspruch 3, zu dem ferner ein oberer Gurt (60,210,402) gehört, der sich bei an dem Tier (34) angelegter Weste (12) von einer ersten Flanke der Weste (12) über den Rücken des Tieres (34) zu einer zweiten Flanke der Weste (12) erstreckt, um die Weste (12) an dem Tier (34) zu sichern, wobei sich der Anleingurt (78) abnehmbar an dem oberen Gurt (60,210,402) gesichert anbringen lässt, um die Weste (12) an dem Sicherheitsgurt (96) des Fahrzeugs (38) zu sichern.

8. Tierrückhaltesystem nach Anspruch 7, wobei die Weste (12) einen Westenmantel (13) beinhaltet, wobei der obere Gurt (60,210,402) ein erstes Ende (62,64,202,204) aufweist, das mittels einer Schnalle (52) abnehmbar mit der ersten Seite des Westenmantels (13) verbunden ist.

9. Tierrückhaltesystem nach Anspruch 8, wobei der obere Gurt (60,210,402) ein zweites Ende (62,64,202,402) aufweist, das durch eine Gurtlängeneinstellvorrichtung (56) mit der zweiten Flanke des Westenmantels (13) verbunden ist.

10. Tierrückhaltesystem nach Anspruch 9, wobei der obere Gurt (60,210,402) durch mindestens zwei Schnallen (52) und mindestens zwei Gurtlängeneinstellvorrichtungen (56) mit dem Westenmantel (13) verbunden ist.

11. Tierrückhaltesystem nach Anspruch 8, bei dem entweder der eine obere Gurt (60,210,402) oder der Anleingurt (78) eine daran gesicherte Stahlschlaufe (74) aufweisen, und das jeweils andere Element, sei es der obere Gurt (60,210,402) oder der Anleingurt (78), einen daran befestigten Karabinerhaken (80) aufweisen, der an der Stahlschlaufe (74) einklinkt, um den Anleingurt (78) abnehmbar mit dem oberen Gurt (60,210,402) zu verbinden.

12. Tierrückhaltesystem nach Anspruch 11, wobei die Stahlschlaufe (74) an dem oberen Gurt (60,210,402) befestigt wird, indem der obere Gurt (60,210,402) durch die Stahlschlaufe (74) führt, und der Karabinerhaken (80) an einem ersten Ende des Anleingurts (78) befestigt wird.

13. Tierrückhaltesystem nach Anspruch 7, wobei der obere Gurt (60,210,402) auf mindestens zwei oberen Gurten (60,210,402) basiert, wobei jeder der oberen Gurte (60,210,402) durch eine Schnalle (52) an der ersten Flanke der Weste (12) und eine Gurtlängeneinstellvorrichtung (56) an der zweiten Flanke des Westenmantels (12) mit dem Westenmantel (12) verbunden ist.

14. Tierrückhaltesystem nach Anspruch 13, bei dem der eine der wenigstens zwei oberen Gurte (60,210,402) oder der Anleingurt (78) eine daran gesicherte Stahlschlaufe (74) aufweisen, und das jeweils andere Element, sei dies einer der wenigstens zwei oberen Gurte (60,210,402) oder der Anleingurt (78), einen daran befestigten Karabinerhaken (80) aufweisen, die an der Stahlschlaufe (74) einklinkt, um den Anleingurt (78) mit dem oberen Gurt (60,210,402) abnehmbar zu verbinden.

15. Tierrückhaltesystem nach Anspruch 14, wobei die Stahlschlaufe (74) an den mindestens zwei oberen Gurten (60,210,402) befestigt wird, indem die mindestens zwei oberen Gurte (60,210,402) durch die Stahlschlaufe (74) geführt wird, und der Karabinerhaken (80) an einem ersten Ende des Anleingurts (78) befestigt ist.

16. Tierrückhaltesystem nach Anspruch 3, wobei der obere Gurt (60,210,402) durch eine Stahlschlaufe (74) hindurch geführt wird, um die Stahlschlaufe (74) an dem oberen Gurt (60,210,402) zu befestigen, wobei der Anleingurt (78) einen Karabinerhaken (80) aufweist, der abnehmbar an der Stahlschlaufe (74) einklinkt.

17. Tierrückhalteeinrichtung nach Anspruch 6, wobei der Brustgurt (24) an dem randseitigen Gurt (20) befestigt ist.

18. Tierrückhaltesystem nach Anspruch 5, wobei die Verstärkungsgurte (16) ferner an entgegensetzten Seiten der Weste (12) Verstärkungsgurte (106) aufweisen, die sich oberhalb der Beinlöcher (14) der Weste (12) zwischen den randseitigen Gurten (20) erstrecken.

19. Tierrückhaltesystem nach Anspruch 7, wobei der obere Gurt (210,402) eine nicht unterbrochene Schlaufe beinhaltet, die durch eine Schnallenzunge und eine Gurtbandeinstelleinrichtung (212) geschlungen ist, die obere und untere Abschnitte (214,216,404,406) des oberen Gurts (406) definiert, die sich zwischen der Schnallenzunge und der Gurtbandeinstelleinrichtung (212) erstrecken, wobei der obere und untere Abschnitt (214,216,404,406) in Nähe der Schnallenzunge aneinander gesichert sind, und wobei sich die Weste (12) abnehmbar an dem Sicherheitsgurt (96) sichern lässt, indem der Sicherheitsgurt (96) zwischen dem oberen und unteren Abschnitt (214,216,404,406) des oberen Gurts (210,402) hindurchgeführt wird.

20. Tierrückhaltesystem nach Anspruch 13 und 19, zu dem ferner eine an der Schnalle (52) befestigte Schnallenzungebefestigungsschlaufe (208) und eine an der Gurtbandeinstelleinrichtung (212) befestigte Gurtbandeinstelleinrichtungsbefestigungsschlaufe (218) gehören, wobei die Schnallenbefestigungsschlaufe (208) und der Befestigungsgurt für die Gurtbandeinstelleinrichtung durch entsprechende an entgegensetzten Flanken des Westenmantels (13) befestigte Ringe (206) geführt sind, um den oberen Gurt (210,402) an dem Westenmantel (13) zu sichern.

21. Tierrückhaltesystem nach Anspruch 5 und 20, wobei die Ringe (206) an dem Westenmantel (12) durch die Verstärkungsgurte (26,28) befestigt sind, die durch entsprechende der Ringe (206) geführt sind.

22. Tierrückhaltesystem nach Anspruch 1, zu dem ferner wenigstens erste und zweite Befestigungsgurte (46,218,318) gehören, wobei jeder der ersten und zweiten Befestigungsgurte (46,218,318) an gegenüberliegenden Enden an entgegensetzten Flanken des Westenmantels (13) an dem Westenmantel (13) gesichert ist, ein Schnallenbefestigungsgurt an der Schnalle (52) befestigt und um den ersten Befestigungsgurt (46,218,318) geführt ist, und ein Befestigungsgurt für die Gurtbandeinstelleinrichtung an der Gurtbandeinstelleinrichtung (212) befestigt und um den zweiten Befestigungsgurt (46,218,318) geführt ist.

23. Tierrückhaltesystem nach Anspruch 22, wobei die Enden des ersten und zweiten Befestigungsgurts (46,218,318) an den Verstärkungsgurten (26,28) festgebunden und befestigt sind.

24. Tierrückhaltesystem nach Anspruch 19 und 22, wobei der Schnallenbefestigungsgurt (208,308) und der Befestigungsgurt für die Gurtbandeinstelleinrichtung in der Lage ist, zwischen gegenüberliegenden Enden des ersten und zweiten Befestigungsgurts (46,218,318) zu gleiten, um eine Stelle zu erlauben, an der der obere Gurt (210,402) an dem Westenmantel (13) gesichert ist, um sich relativ zu dem Westenmantel (13) zu verschieben.

25. Tierrückhaltesystem nach Anspruch 24, wobei der obere Abschnitt und der untere Abschnitt (214,216,404,406) des oberen Gurts (210,402) in Nähe der Zunge aneinander befestigt sind, um eine vorbestimmte Abrisskraft aufzuweisen.

26. Tierrückhaltesystem nach Anspruch 25, wobei der obere und untere Abschnitt (214,216,404,406) des oberen Gurts (210,403) in Nähe der Zunge durch Nähnähte aneinander befestigt sind, wobei die vorbestimmte Abrisskraft durch mindestens einen der Parameter Fadenstärke, Fadentyp, Art der Naht und Anzahl der Nähstiche bestimmt ist.

## Revendications

1. Système de retenue (10, 100, 200, 300) d'animal pour véhicule (38), comprenant
un harnais (12) ayant un baudrier (13) comportant des trous (14) pour les pattes avant (90) d'un animal (34), et ayant des côtés avant et arrière (30, 32) symétriques autour des trous (14) pour pattes de façon que le harnais (12) puisse être placé sur l'animal (34), l'un ou l'autre de ces côtés avant et arrière (30, 32) étant en face des pattes avant (90) de l'animal, et
une sangle supérieure (60, 210, 402) qui s'étend d'un côté à l'autre du dos de l'animal (34) portant le harnais, depuis un premier côté du baudrier (13) jusqu'à un deuxième côté du baudrier (13), lorsque le baudrier (13) est sur l'animal (34) afin de fixer le harnais à l'animal (34), la sangle supérieure (60, 210, 402) étant fixée de manière rotative aux premier et deuxième côtés du baudrier (13) et le harnais pouvant se fixer de manière amovible à une ceinture de sécurité (96) montée sur un siège du véhicule (38).

2. Système de retenue d'animal selon la revendication 1, dans lequel le harnais (12) a une forme sphérique.

3. Système de retenue d'animal selon la revendication 1, comprenant en outre une longe (78) servant à fixer de manière amovible le harnais (12) à la ceinture de sécurité (96) montée sur un siège du véhicule (38), la longe (78) ayant au moins une boucle (85, 87) par laquelle on fait passer la ceinture de sécurité (96) du véhicule (38) pour fixer de manière amovible la longe (78) à la ceinture de sécurité (96).

4. Système de retenue d'animal selon la revendication 3, dans lequel la longe (78) comporte une pluralité de boucles (85, 87) le long de celle-ci, la ceinture de sécurité (96) étant amenée à passer à travers l'une des différentes boucles (85, 87) afin de fixer de manière amovible la longe (78) à la ceinture de sécurité (96).

5. Système de retenue d'animal selon la revendication 3, dans lequel le harnais (12) comporte un baudrier (13) et des sangles de renforcement (16) fixées au baudrier (13).

6. Système de retenue d'animal selon la revendication 5, dans lequel les sangles de renforcement (16) comprennent une sangle périphérique (20) qui s'étend autour du baudrier (13) au voisinage immédiat d'un pourtour de celui-ci et une sangle de poitrine (24) qui s'étend depuis la sangle périphérique (20) sur le côté avant (30, 32) du baudrier (13) jusqu'à la sangle périphérique (20) sur le côté arrière (30, 32) du baudrier (13) entre les trous (14) pour pattes.

7. Système de retenue d'animal selon la revendication 3, comprenant en outre une sangle supérieure (60, 210, 402) qui s'étend d'un côté à l'autre du dos de l'animal (34) depuis un premier côté du harnais (12) jusqu'à un deuxième côté du harnais (12) lorsque le harnais (12) est sur l'animal (34) afin de fixer le harnais (12) à l'animal (34), la longe (78) pouvant se fixer de manière amovible à la sangle supérieure (60, 210, 402) pour fixer le harnais (12) à la ceinture de sécurité (96) montée sur un siège du véhicule (38).

8. Système de retenue d'animal selon la revendication 7, dans lequel le harnais (12) comprend un baudrier (13), la sangle supérieure (60, 210, 402) ayant une première extrémité (62, 64, 202, 204) accouplée de manière amovible avec le premier côté du baudrier (13) par une agrafe (52).

9. Système de retenue d'animal selon la revendication 8, dans lequel la sangle supérieure (60, 210, 402) comporte une deuxième extrémité (62, 64, 202, 402) accouplée avec le deuxième côté du baudrier (13) par un système de réglage (56) de longueur de sangle.

10. Système de retenue d'animal selon la revendication 9, dans lequel la sangle supérieure (60, 210, 402) est accouplée avec le baudrier (13) par au moins deux agrafes (52) et au moins deux systèmes de réglage (56) de longueur de sangle.

11. Système de retenue d'animal selon la revendication 8, dans lequel l'une des sangle supérieure (60, 210, 402) et longe (678) comporte un anneau en acier (74) fixé à celle-ci et l'autre des sangle supérieure (60, 210, 402) et longe (78) comporte un mousqueton (80) fixé à celle-ci, qui s'accroche à l'anneau en acier (74) pour accoupler de manière amovible la longe (78) avec la sangle supérieure (60, 210, 402).

12. Système de retenue d'animal selon la revendication 11, dans lequel l'anneau en acier (74) est fixé à la sangle supérieure (60, 210, 402) par le fait que la sangle supérieure (60, 210, 402) passe dans l'anneau en acier (74), et le mousqueton (80) est fixé à une première extrémité de la longe (78).

13. Système de retenue d'animal selon la revendication 7, dans lequel la sangle supérieure (60, 210, 402) comporte au moins deux sangles supérieures (60, 210, 402), chaque sangle supérieure (60, 210, 402) étant accouplée avec le baudrier (13) par une agrafe (52) sur le premier côté du harnais (12) et par un système de réglage (56) de longueur de sangle sur le deuxième côté du baudrier (13).

14. Système de retenue d'animal selon la revendication 13, dans lequel l'une des au moins deux sangles supérieures (60, 210, 402) et longe (78) comporte un anneau en acier (74) fixé à celle-ci et l'autre des au moins deux sangles supérieures (60, 210, 402) et longe (78) comporte un mousqueton (80) fixé à celle-ci et qui s'accroche à l'anneau en acier (74) pour accoupler de manière amovible la longe (78) avec la sangle supérieure (60, 210, 402).

15. Système de retenue d'animal selon la revendication 14, dans lequel l'anneau en acier (74) est fixé aux au moins deux sangles supérieures (60, 210, 402) par les au moins deux sangles supérieures (60, 210, 402) passant dans l'anneau en acier (74), et le mousqueton (80) est fixé à une première extrémité de la longe (78).

16. Système de retenue d'animal selon la revendication 3, dans lequel la sangle supérieure (60, 210, 402) passe dans un anneau en acier (74) pour fixer l'anneau en acier (74) à la sangle supérieure (60, 210, 402), la longe (78) ayant un mousqueton (80) qui s'accroche de manière amovible à l'anneau en acier (74).

17. Système de retenue d'animal selon la revendication 6, dans lequel la sangle de poitrine (24) est fixée à la sangle périphérique (20).

18. Système de retenue d'animal selon la revendication 5, dans lequel les sangles de renforcement (16) comportent en outre, de part et d'autre du harnais (12), des sangles de renforcement (106) qui s'étendent entre la sangle périphérique (20) au-dessus des trous (14) pour pattes du harnais (12).

19. Système de retenue d'animal selon la revendication 7, dans lequel la sangle supérieure (210, 402) comporte une boucle continue qui est enfilée dans un ardillon d'agrafe et un système de réglage (212) de lanière définissant des parties supérieure et inférieure (214, 216, 404, 406) de la sangle supérieure (406) s'étendant entre l'ardillon d'agrafe et le système de réglage (212) de lanière, les parties supérieure et inférieure (214, 216, 404, 406) étant fixées l'une à l'autre au voisinage immédiat de l'ardillon d'agrafe, le harnais (12) pouvant se fixer de manière amovible à la ceinture de sécurité (96) en faisant passer la ceinture de sécurité (96) entre les parties supérieure et inférieure (214, 216, 404, 406) de la sangle supérieure (210, 402).

20. Système de retenue d'animal selon les revendications 13 et 19 et comprenant en outre un mousqueton (208) de fixation d'agrafe assujetti à l'agrafe (52) et un mousqueton (218) de fixation de système de réglage de lanière assujetti au système de réglage (212) de lanière, le mousqueton (208) de fixation d'agrafe et le mousqueton (218) de fixation de système de réglage de sangle passant dans des anneaux respectifs (206) fixés de part et d'autre du baudrier (13) pour fixer la sangle supérieure (210, 402) au baudrier (13).

21. Système de retenue d'animal selon les revendications 5 et 20, dans lequel les anneaux (206) sont fixés au baudrier (13) par les sangles de renforcement (26, 28) passant dans des anneaux respectifs parmi les anneaux (206).

22. Système de retenue d'animal selon la revendication 1, comprenant en outre au moins une première et une deuxième sangles de fixation (46, 218, 318), chacune des première et deuxième sangles de fixation (46, 218, 318) étant fixée en ses extrémités opposées au baudrier (13), de part et d'autre du baudrier (13), une sangle de fixation d'agrafe fixée à l'agrafe (52) et passant autour de la première sangle de fixation (46, 218, 318), et une sangle de fixation de système de réglage de lanière fixée au système de réglage (212) de lanière et passant autour de la deuxième sangle de fixation (46, 218, 318).

23. Système de retenue d'animal selon la revendication 22, dans lequel les extrémités des première et deuxième sangles de fixation (46, 218, 318) sont enroulées autour et fixées aux sangles de renforcement (26, 28).

24. Système de retenue d'animal selon les revendications 19 et 22, dans lequel la sangle de fixation (208, 308) d'agrafe et la sangle de fixation de système de réglage de lanière peuvent coulisser entre des extrémités opposées des première et deuxième sangles de fixation (46, 218, 318) en ménageant un endroit où la sangle supérieure (210, 402) est fixée au baudrier (13) pour bouger par rapport au baudrier (13).

25. Système de retenue d'animal selon la revendication 24, dans lequel la partie supérieure et la partie inférieure (214, 216, 404, 406) de la sangle supérieure (210, 402) sont fixées l'une à l'autre au voisinage immédiat de l'ardillon pour avoir une résistance à la rupture prédéterminée.

26. Système de retenue d'animal selon la revendication 25, dans lequel les parties supérieure et inférieure (214, 216, 404, 406) de la sangle supérieure (210, 403) sont fixées l'une à l'autre au voisinage immédiat de l'ardillon par des points de couture, la résistance à la rupture étant prédéterminée par au moins un facteur parmi le diamètre du fil, le type de fil, le type de point et le nombre de points.
